# EUROPEAN PATENT SPECIFICATION

(11) **EP 1 676 482 B1**
(45) Date of publication and mention of the grant of the patent: **30.07.2008**
(21) Application number: 05388119.9
(22) Date of filing: 29.12.2005
(51) Int. Cl.: A22B 3/00

(54) **An apparatus, a box and a method for the stunning of slaughter animals**
Vorrichtung, Kasten und Verfahren zum Betäuben von Schlachtvieh
Système anesthésique, caisse et méthode anesthésique pour les animaux à abattre

(30) Priority: 30.12.2004 DK 200402025
(43) Date of publication of application: 05.07.2006
(73) Proprietor: Slagteriernes Forskningsinstitut, 4000 Roskilde (DK)
(72) Inventor: Christensen, Leif, 3500 Værløse (DK)
(74) Representative: Joergensen, Bjoern Barker

(56) References cited:
- EP-A- 0 280 111
- EP-A- 0 622 021
- WO-A-03/047355
- WO-A-20/04064527

## Description

The present invention relates to an apparatus, a box and a method for the stunning of slaughter animals.

When stunning slaughter animals of some size, e.g. cattle, a so-called shooting box is used for fixating the animal during the stunning. The animal is driven into the box, which is closed, and the head of the animal is fixated by means of a couple of shackles holding the neck of the animal. Then the animal is shot with a bolt pistol or stunned by means of electricity. Such a box is disclosed in WO 03/047355 A1 (Slagteriernes Forskningsinstitut). The characteristic feature of the box is that it automatically adjusts to the size of the animal, thus making it easier to fixate the animal. After the stunning, one side of the box is opened and the floor is tilted upwards towards the opening, which makes the stunned animal slide out onto the floor of the slaughterhouse. An operator shackles the animal on a suspension conveyor, which conveys it for sticking, bleeding, etc. A problem in connection with such shooting boxes may be that they have a low capacity, so that one shooting box may not suffice.

Smaller slaughter animals, e.g. pigs, are stunned in facilities, which are constructed to work with a considerably higher capacity. In this connection it is most advantageous to use CO₂ stunning facilities. One or more animals are driven into a box, which is lowered into a pit having a CO₂ atmosphere. When the animals have stayed in the atmosphere for some time, they have become stunned, and the box is raised and emptied, for instance by opening one side of the box and by tilting the floor towards the opening, so that the animals slide out onto a shackling table or a conveyor, conveying the animals to an operator. The operator shackles the animals one by one. The facility comprises more boxes, which may be suspended in a paternoster system conveying the boxes between the various working positions. EP 0280 111 A1 (Butina ApS) discloses a stunning facility of the above type accommodating two animals in each box. In more recent facilities the boxes may be designed to accommodate many animals, e.g. 5-8 animals in each box, and in these cases it can present a problem to discharge them from the box in such a manner that they are easily accessible for shackling by the operator.

It is an object of the Invention to provide an apparatus for the stunning of slaughter animals in a box, where it becomes possible to increase the capacity of the apparatus without entailing particular inconveniencies for the operator shackling the animals,

The apparatus according to the invention is of the type comprising at least one box for the animals, said box having at one side a discharge gate for discharging stunned animals from the box, and a receiving area for receiving the animals to be suspended on a conveyor, and the apparatus is characterized in that the box at a distance from the discharge gate is provided with one or more partition gates dividing the box into more compartments, each accommodating at least one animal.

By dividing the box into more compartments is attained that, after the stunning, the animals can be discharged in several operations, enabling the operator to have the same number of animals, or if desired, fewer animals, delivered at a time, even though the box is designed for a larger number of animals. The shackling operation can therefore take place in a quite uncomplicated manner, particularly if a smaller number of animals arrive at a time, which makes the animals easy to access. When the stunned animals are to be discharged from the box, the discharge gate is first opened and the animals in the compartment nearest to the gate are discharged onto the receiving area. After the animals In the receiving area have been shackled or removed by means of a conveyor, the partition gate at the other side of the compartment Is opened, so that the animals in the compartment located behind the gate can be discharged through the first compartment to the receiving area. If further partition gates are present in the box, a similar procedure is used for emptying the compartments located behind the gates, such that the compartment are emptied one by one as the animals in the receiving area are shackled or removed.

The partition gates in question in the boxes result in a smaller number of animals being discharged at a time, such that the animals fall out in such a manner that they are fairly easy to access for the operator. The result is that the animals can be supplied to the suspension conveyor at a high speed and in an even flow.

Moreover, the partition gates offer the advantage of keeping the animals separated from one another before the stunning, which is in particular important in case of heavy animals in form of cattle weighing more or many hundred kilos. The animals may be difficult to handle and fixate If more animals are together. One animal in each box compartment also results in the animal falling properly out onto the receiving area, which is a considerable advantage in case of animals, which are heavy to handle.

A higher capacity of the stunning facility means that it becomes more attractive to stun heavy slaughter animals in form of cattle in CO₂ stunning facilities of the type used for the stunning of pigs. The drawbacks connected with shooting or electric stunning are thus eliminated.

The known stunning facilities for pigs of the paternoster type accommodating 5-8 animals in each box may comparatively simply be reconstructed to stun cattle weighing more or many hundred kilos.

The partition gate(s) is in the closed position preferably in parallel with the discharge gate.

The box may, in an embodiment of the apparatus according to the invention, have one partition gate dividing the box into two compartments of equal size. Each compartment may accommodate one animal, e.g. one head of cattle, such as cows, young bulls or calves, or a group of animals, e.g. 2-10 slaughter pigs.

The discharge gate and the partition gate are preferably chosen among the following types of gates: sliding gate, lifting gate and tilting gate. A tilting gate may advantageously be used, which is hinged at the top so that it may be swung out. The gate need not constitute the entire side of the box, but may for instance constitute the lower part of the side, whereas the upper part is a fixed wall.

The box may have a floor, which is in one piece and which may be tilted from a horizontal position into an oblique position, in which the edge nearest to the receiving area is lowered relative to the opposite edge. The floor of the box may be tilted about a horizontal axis along one of the edges extending in parallel with the discharge gate, or e.g. about an axis extending beneath the partition gate.

According to a preferred embodiment the box comprises a tiltable floor segment for each of the compartments, into which the box is divided by the partition gate(s).

In this embodiment the floor segment nearest to the receiving area is tiltable from a horizontal position into an oblique position, in which the floor segment has been tilted towards the receiving area, and the adjacent floor segment may likewise be tilted Into an oblique position, in which the floor segment has been tilted towards the receiving area, but where, in the oblique position, it is positioned higher than the floor segment nearest to the receiving area.

In the horizontal position the two floor segments may be at the same level, or the floor segment second nearest to the receiving area may be raised above the floor segment nearest to the receiving area in the horizontal positions of the segments.

The floor of the box nearest to the receiving area may be tiltable in connection with the opening of the discharge gate.

The floor of the box second nearest to the receiving area is tiltable in connection with the opening of the partition gate nearest to the receiving area.

According to a particular embodiment the discharge gate and/or the partition gate are fixed partitions, e.g. fixed walls, and the floor or the floor segments of the individual compartments are designed to be downwards tiltable for discharging stunned animals to the receiving area.

The box may comprise an entrance gate for each compartment, into which the box is divided by the partition gate. The entrance gate is preferably positioned substantially perpendicular to the partition gate.

The apparatus according to the invention may comprise a CO₂ stunning pit, in which one or more boxes are lowered for stunning of the animals. The apparatus may in particular comprise more boxes, which are moved around after one another by a conveyor system, which successively takes every box to a filling area for loading animals in from a driving passage, a stunning area in the form of a pit with a stunning atmosphere, and the receiving area for discharge of the stunned animals and for suspension thereof on a conveyor.

The apparatus according to the invention may according to another embodiment comprise a stationary box positioned at the end of a driving passage and having the receiving area at the side, said box comprising the discharge gate and, if desired, means for stunning the animals in the box, such as a shooting arrangement or an electric stunning device.

The box may comprise means for fixating parts of the animals in the box, e.g. neck shackles.

The invention also relates to a box for the stunning of slaughter animals, said box having at one side a discharge gate for discharging stunned animals to a receiving area for suspension of the animals on a conveyor. The box according to the invention Is characterized in that, at a distance from the discharge gate, the box is provided with one or more partition gates dividing the box into more compartments, each of which accommodating at least one animal.

The box may have one or more of the characteristics stated in claims 2-7.

The partition gate(s) is preferably in the closed position substantially in parallel with the discharge gate.

Moreover, the invention relates to a method for the stunning of slaughter animals in a box for the animals. The method according to the invention is characterized in that, until being discharged from the box, the animals are kept separated individually or in groups in the stunning box by means of one or more partition gates dividing the box into more compartments, each of which accommodating at least one animal.

An embodiment of the method according to the invention is characterized in that the animal or the group of animals in the compartment nearest to the receiving area is discharged by tilting the floor of the compartment down in an oblique position towards the area and by opening the discharge gate, so that the animal(s) slides down onto the area.

The animal or the group of animals in the compartment second nearest to the receiving area may be discharged after a complete or partial emptying of the compartment nearest to the receiving area, said emptying being established by tilting the floor of the compartment and by opening the partition gate, such that the animal(s) slides onto the floor of the compartment nearest to the receiving area and from there further down onto the receiving area.

The emptying of the compartments by tilting the floor and opening the discharge gate/partition gate may be initiated with a time delay, starting with the compartment nearest to the receiving area, and may be carried out with or without time overlap.

The invention will be described in detail in the following with reference to the drawing, in which
- Fig. 1 shows an apparatus according to the invention, seen from above, for the stunning of in particular cattle, in which boxes are conveyed around one after another and down into a pit with a CO₂ atmosphere,
- Fig. 2 is a perspective view of a box for use in this apparatus or as a stationary stunning box, and
- Fig. 3 shows the movements of the gates and the floor sections of the box.

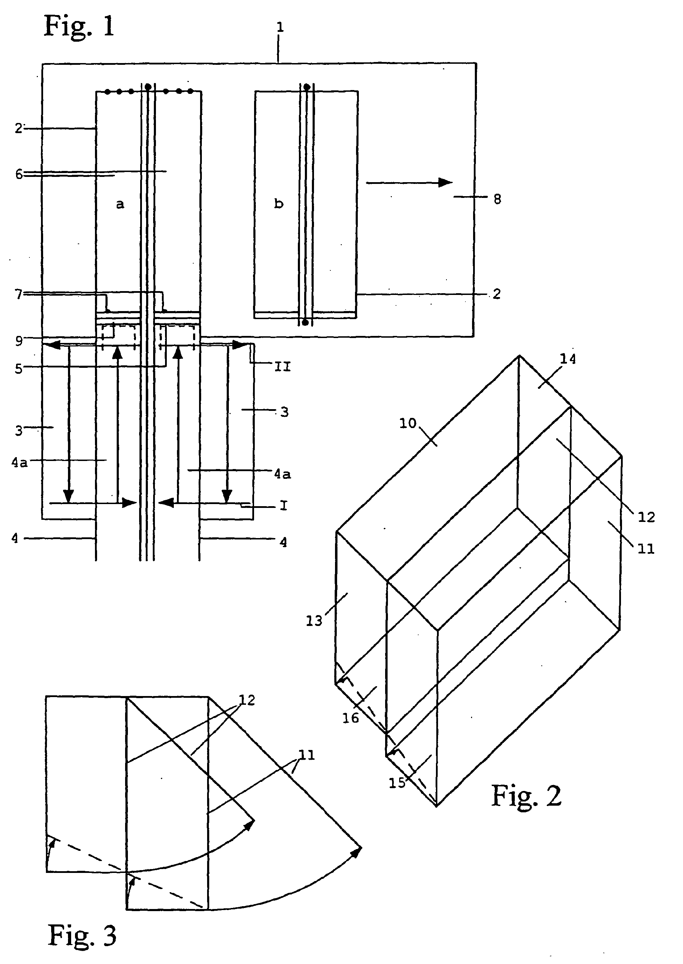

The apparatus in Fig. 1 comprises a pit 1 with a CO₂ atmosphere. A paternoster system leads a number of two-parted boxes 2 down into the pit and to various working positions above the pit. In the position a, the box is located above the pit for receiving two slaughter animals. For driving the animals into the box two automatic systems 3 are used, said systems receiving an animal at their entrance end from a driving passage 4 and, by means of a driving sliding gate 5, driving the animal forward into the driving passage section 4a opposite the system and into the related box compartment 6. When two animals have been driven into the box, it is closed by means of two lifting gates 7 at the entrance end of the box. The box is lowered into the CO₂ atmosphere of the pit and is brought to a standstill therein, when the subsequent box in the paternoster is in position for receiving animals from the driving passage 4. When the subsequent box has been filled with animals, the box in the pit and the other boxes are set in motion again. Thus the process continues. During the stay in the pit the animals are stunned (fatally or non-fatally depending on the detention time). The paternoster then brings the box out of the pit to a position b at a fall-out area 8 for discharge of the stunned animals from the box in question. Having been emptied, the box is once more brought to the position a to be filled with animals again and repetition of the stunning procedure.

The automatic systems 3 for driving animals forward in the passage section 4a and into an empty box compartment 6 comprise a running sliding gate device of the construction described in WO 03/079770 A1 (Butina ApS). It functions in the following way: An animal from the pen area of the slaughterhouse is driven through the driving passage 4 and into the driving passage section 4a. The running sliding gate 5 is slid from a position I outside the driving passage into the passage, such that the entrance end of the section 4a is closed behind the animal. A sliding gate 9 at the outlet end of the section is opened as soon as an empty box 2 is in place in position a. The lifting gate 7 is opened so that the animal can move into the box compartment behlnd the gate 7. The running sliding gate 5 is set in motion and taken from a position at the entrance end of the section to a position at the outlet end of the section, whereby the animal is driven into the box compartment. The outlet end of the section is closed by means of the sliding gate 9, and the lifting gate 7 in the box is closed behind the animal. The running sliding gate 5 is pulled out of the driving passage to position II and is returned to position I at the entrance end of the section. In this way two animals are driven into respective box compartments by means of the two automatic systems 3. The driving procedure may then be repeated with a new animal.

The box used is of a special construction: It has two sidewalls 10,11, an intermediate wall 12, two end walls 13,14 and a floor, which is divided in two floor sections 15,16, see fig. 2. The sidewall 10, which Is distal in the figure, is fixed, whereas the proximal sidewall 11 is a gate, which is hinged along its upper horizontal edge, so that the gate may tilt for the formation of an opening for discharge of stunned animals to a fall-out area 8. The intermediate wall 12 is designed in the same way as the proximal sidewall 11, i.e. as a gate, which can tilt upwards for the formation of an opening allowing discharge of animals from the distal box compartment to the fall-out area, when the tilting gate has also been opened, see fig. 3.

The end wall 13 has two lifting gates 7 allowing an animal from the driving passage 4 to pass into the box compartment 6 situated behind it (fig. 1). The end wall 14 is provided with bars to appear light, which encourages the animals to move into the box compartments.

The discharge of stunned animals from a box positioned in position b in the apparatus takes place in the following way: The gate 11 is tilted outwards and the floor section 15 is tilted upwards to the oblique positions shown in Fig. 3, whereby the animal on the floor section 15 slides out through the side opening of the box and into the shackling area 8. An operator shackles the animal in one or both hind legs, following which the animal is conveyed away by the suspension conveyor for further handling (sticking, bleeding, etc.) The intermediate wall 12 and the floor section 16 are then tilted to the oblique positions shown in Fig. 3, following which the animal on this floor section slides out through the side opening of the box compartment and down onto the floor section 15 and further on through the opening below the gate 11 and out onto the shackling area 8, where it is shackled and conveyed away. In this manner a controlled discharge of one animal at a time from the box for manual shackling without complications is attained.

Instead of separate handling of one animal, the apparatus may, of course, also be designed for separate treatment of a group of animals, for instance a group of 2-8 slaughter pigs.

## Claims

1. Apparatus for the stunning of slaughter animals, said apparatus comprising at least one box (2) for the animals, said box having a discharge gate (11) positioned at one side for discharging stunned animals from the box, and a receiving area (8) for receiving the animals for suspension on a conveyor, **characterized in that** at a distance from the discharge gate (11) the box is provided with one or more partition gates (12) dividing the box into more compartments (6), each accommodating at least one animal.

2. Apparatus according to claim 1, **characterized in that** the box (2) has a partition gate (12) dividing the box into two compartments (6) of equal size.

3. Apparatus according to claim 1, **characterized in that** the box (2) comprises a tiltable floor segment (15,16) for each of the compartments, into which the box is divided by the partition gate(s) (12).

4. Apparatus according to claim 3, **characterized in that** the floor segment (15) nearest to the receiving area (8) is tiltable from a horizontal position into an oblique position, in which the floor segment has been tilted towards the receiving area (8), and that the adjacent floor segment (16) may likewise be tilted into an oblique position, in which the floor segment has been tilted towards the receiving area (8), but where, in the oblique position, it is positioned higher than the floor segment nearest to the receiving area.

5. Apparatus according to claim 4, **characterized in that** in the horizontal positions of the segments the floor segment (16) second nearest to the receiving area (8) is raised above the floor segment (15) nearest to the receiving area (8).

6. Apparatus according to claim 3, **characterized in that** the floor segment (16) second nearest to the receiving area (8) is tiltable in connection with the opening of the partition gate (12) nearest to the receiving area (8).

7. Apparatus according to claim 1, **characterized in that** the box comprises an entrance gate (7) for each compartment (6), into which the box is divided by the partition gate (12).

8. Box (2) for the stunning of slaughter animals, said box having at one side a discharge gate (11) for discharging stunned animals to a receiving area (8) for suspension of the animals on a conveyor, **characterized in that** the box (2) at a distance from the discharge gate (11) is provided with one or more partition gates (12) dividing the box into more compartments (6), each of which accommodating at least one animal.

9. Box according to claim 8, **characterized by** one or more of the characteristics stated in claims 2-7.

10. A method for the stunning of slaughter animals in a box (2) for the animals, **characterized in that** the animals prior to being discharged from the box are kept separated individually or in groups in the stunning box (2) by means of one or more partition gates (12) dividing the box into more compartments (6), each of which accommodating at least one animal.

## Patentansprüche

1. Vorrichtung zum Betäuben von Schlachttieren, wobei die Vorrichtung wenigstens einen Kasten bzw. eine Box (2) für die Tiere umfasst, wobei die Box ein an einer Seite angeordnetes Entladegatter (11) besitzt, um die betäubten Tiere aus der Box zu entladen, sowie einen Aufnahmebereich (8) zur Aufnahme der Tiere zwecks Aufhängung auf einem Förderer, **dadurch gekennzeichnet, dass** die Box mit einem Abstand zum Entladegatter (11) mit einem oder mehr Trenngatter/n (12) versehen ist, die die Box in mehrere Kammern bzw. Abteile (6) teilen, von denen jedes wenigstens ein Tier beherbergt.

2. Vorrichtung nach Anspruch 1, **dadurch gekennzeichnet, dass** die Box (2) ein Trenngatter (12) hat, das die Box in zwei Abteile (6) von gleicher Größe teilt.

3. Vorrichtung nach Anspruch 1, **dadurch gekennzeichnet, dass** die Box (2) einen kipp- bzw. schwenkbaren Bodenabschnitt (15, 16) für jedes der Abteile umfasst, in die die Box durch das/die Trenngatter (12) geteilt wird.

4. Vorrichtung nach Anspruch 3, **dadurch gekennzeichnet, dass** der dem Aufnahmebereich (8) am nächsten liegende Bodenabschnitt (15) von einer horizontalen Position in eine schräge Position kippbar ist, in der der Bodenabschnitt in Richtung bzw. zu dem Aufnahmebereich (8) gekippt wurde, und dass der angrenzende Bodenabschnitt (16) gleichermaßen in eine schräge Position gekippt werden kann, in der der Bodenabschnitt in Richtung bzw. zu dem Aufnahmebereich (8) gekippt wurde, aber wo er, in der schrägen Position, höher als der dem Aufnahmebereich am nächsten liegende Bodenabschnitt angeordnet ist.

5. Vorrichtung nach Anspruch 4, **dadurch gekennzeichnet, dass** in den horizontalen Positionen der Abschnitte der dem Aufnahmebereich (8) am zweitnächsten liegende Bodenabschnitt (16) über den Bodenabschnitt (15) gehoben wird, der dem Aufnahmebereich (8) am nächsten liegt.

6. Vorrichtung nach Anspruch 3, **dadurch gekennzeichnet, dass** der dem Aufnahmebereich (8) am zweitnächsten liegende Bodenabschnitt (16) in Verbindung mit der Öffnung des dem Aufnahmebereich (8) am nächsten liegenden Trenngatters (12) kippbar ist.

7. Vorrichtung nach Anspruch 1, **dadurch gekennzeichnet, dass** die Box ein Einlassgatter (7) für jedes Abteil (6) umfasst, in das die Box durch die Trenngatter (12) geteilt ist.

8. Box (2) zum Betäuben von Schlachttieren, wobei die Box an einer Seite ein Entladegatter (11) zum Entladen der betäubten Tiere in einen Aufnahmebereich (8) zwecks Aufhängung der Tiere auf einem Förderer hat, **dadurch gekennzeichnet, dass** die Box (2) mit einem Abstand zum Entladegatter (11) mit einem oder mehrere Trenngatter/n (12) versehen ist, die die Box in mehr Abteile (6) teilen, von denen jedes wenigstens ein Tier beherbergt.

9. Box nach Anspruch 8, **gekennzeichnet durch** ein oder mehrere der in den Ansprüchen 2 - 7 angegebenen Merkmale.

10. Verfahren zum Betäuben von Schlachttieren in einer Box (2) für Tiere, **dadurch gekennzeichnet**, das die Tiere vor dem Entladen aus der Box einzeln oder in Gruppen in der Betäubungsbox (2) mithilfe eines oder mehrerer Trenngatter (12) gehalten werden, die die Box in mehrere Abteile (6) teilen, von denen jedes wenigstens ein Tier beherbergt.

## Revendications

1. Appareil pour l'étourdissement d'animaux d'abattoir, ledit appareil comprenant au moins une caisse (2) pour les animaux, ladite caisse ayant une porte d'évacuation (11) positionnée à un côté pour décharger les animaux étourdis de la caisse, et une région de réception (8) pour recevoir les animaux pour la suspension sur un convoyeur, **caractérisé en ce qu'**à une distance de la porte d'évacuation (11) la caisse est munie d'une ou plusieurs portes de séparation (12) divisant la caisse en plusieurs compartiments (6), chacun logeant au moins un animal.

2. Appareil selon la revendication 1, **caractérisé en ce que** la caisse (2) possède une porte de séparation (12) divisant la caisse en deux compartiments (6) de taille égale.

3. Appareil selon la revendication 1, **caractérisé en ce que** la caisse (2) comprend un segment de plancher inclinable (15, 16) pour chacun des compartiments, dans lequel la caisse est divisée par la ou les portes de séparation (12).

4. Appareil selon la revendication 3, **caractérisé en ce que** le segment de plancher (15) le plus proche de la région de réception (8) est inclinable à partir d'une position horizontale en une position oblique, dans laquelle le segment de plancher a été incliné vers la région de réception (8), et **en ce que** le segment de plancher adjacent (16) peut être pareillement incliné en une position oblique, dans laquelle le segment de plancher a été incliné vers la région de réception (8), mais où, dans la position oblique, il est positionné plus haut que le segment de plancher le plus proche de la région de réception.

5. Appareil selon la revendication 4, **caractérisé en ce que** les positions horizontales des segments du deuxième plus proche segment de plancher (16) de la région de réception (8) est élevé au-dessus du segment de plancher (15) le plus proche de la région de réception (8).

6. Appareil selon la revendication 3, **caractérisé en ce que** le deuxième plus proche segment de plancher (16) de la région de réception (8) est inclinable en relation avec l'ouverture de la porte de séparation (12) la plus proche de la région de réception (8).

7. Appareil selon la revendication 1, **caractérisé en ce que** la caisse comprend une porte d'entrée (7), pour chaque compartiment (6), dans lequel la caisse est divisée par la porte de séparation (12).

8. Caisse (2) pour l'étourdissement d'animaux d'abattoir, ladite caisse ayant à un côté une porte d'évacuation (11) pour décharger les animaux étourdis dans une région de réception (8) pour la suspension des animaux sur un convoyeur, **caractérisée en ce que** la caisse (2) à une distance de la porte d'évacuation (11) est munie d'une ou plusieurs portes de séparation (12) divisant la caisse en plusieurs compartiments (6), chacun logeant au moins un animal.

9. Caisse selon la revendication 8, **caractérisée par** une ou plusieurs des caractéristiques mentionnées dans les revendications 2 à 7.

10. Procédé pour l'étourdissement d'animaux d'abattoir dans une caisse (2) pour les animaux, **caractérisé en ce que** les animaux avant d'être déchargés de la caisse sont maintenus séparés individuellement ou en groupes dans la caisse d'étourdissement (2) au moyen d'une ou plusieurs portes de séparation (12) divisant la caisse en plusieurs compartiments (6), chacun d'eux logeant au moins un animal.
